# EUROPEAN PATENT APPLICATION

(11) **EP 2 276 280 A1**
(43) Date of publication of application: **19.01.2011**
(21) Application number: 09738845.8
(22) Date of filing: 28.04.2009
(51) Int. Cl.: H04W 12/08, H04W 8/02, H04W 16/32

(54) **MOBILE COMMUNICATION METHOD AND NETWORK APPARATUS**

(30) Priority: 28.04.2008 JP 2008117306
(71) Applicant: NTT DOCOMO, INC., Chiyoda-ku Tokyo 100-6150 (JP)
(72) Inventor: AOYAGI, kenichiro, Chiyoda-ku Tokyo 100-6150 (JP)
(74) Representative: HOFFMANN EITLE
(86) International application number: PCT/JP2009/058408
(87) International publication number: WO 2009/133908

(57) **Abstract**

A mobile communication method for allowing an access-permitted mobile station to access a specific radio base station, the mobile communication method includes the step of when an access-unpermitted mobile station not registered as a mobile station permitted to access the specific radio base station performs a first predetermined communication in a predetermined area, registering the access-unpermitted mobile station as the mobile station allowed to access the specific radio base station.

## Description

### TECHNICAL FIELD

The present invention relates to a mobile communication method and a network apparatus for allowing an access-permitted mobile station to access a specific radio base station.

### BACKGROUND ART

Recently, considerations have been made on installation of a radio base station for providing a home cell in a mobile communication system, the radio base station typified by a femto radio base station and a home cell radio base station.

Such mobile communication system aims to allow a user owning a radio base station managing a home cell (the owner of a home cell) or a user given an access right (permission of use) by the home cell owner to exclusively use the home cell and to use services unique to the home cell.

Specifically, in the mobile communication system, the radio base station, an access-permitted mobile station management server, or the like is configured to manage an "access list" in advance, and to perform a procedure for checking whether a mobile station is registered in the access list or not when the mobile station is trying to access the home cell by location registration process and the like.

When the mobile station is registered in the access list, the access from the mobile station to the home cell is allowed. When the mobile station is not registered in the access list, the access from the mobile station to the home cell is rejected.

### SUMMARY OF THE INVENTION

### PROBLEMS TO BE SOLVED BY THE INVENTION

In the above-described mobile communication system, in order to update a content of the access list, the home cell owner or a telecommunications carrier has to perform special processing of accessing an Internet site managing the access list and of editing the access list.

Accordingly, a certain amount of time is thought to be required to update the content of the access list (registration or cancellation) and to reflect the update result on the mobile communication system, which brings about a concern that a mobile station carried by an unexpected guest fails to be registered in the access list. Furthermore, concerns about an increase in the volume of the access list and the load of managing the access list arise for reasons such as that a mobile station not having accessed the home cell for a long period continues to be registered as the access-permitted mobile station.

The above concern on the failure of registration can be avoided by managing "all mobile stations" as the access-permitted mobile stations previously. However, there remain other concerns including a concern that access restriction cannot be made on a mobile station which should not be allowed to access the home cell (a mobile station or the like carried by a stranger passing near the home cell). Thus, there is a problem that appropriate access restriction cannot be performed in accordance with the utilization profile of the user.

The present invention has been made in view of the above problems, and has an object to provide a mobile communication method and a network apparatus which are capable of achieving flexible and quick update of an access list and reduction of a processing load related to optimum management of the access list, without using special processing such as editing the access list.

### MEANS FOR SOLVING THE PROBLEMS

The first feature of the present invention relates to a mobile communication method for allowing an access-permitted mobile station to access a specific radio base station, the mobile communication method comprising the step of when an access-unpermitted mobile station not registered as a mobile station permitted to access the specific radio base station performs a first predetermined communication in a predetermined area, registering the access-unpermitted mobile station as the mobile station allowed to access the specific radio base station.

In the first feature of the present invention, the mobile communication method may further comprise the step of when it is detected that the access-unpermitted mobile station has moved out of the predetermined area, canceling the registration of the access-unpermitted mobile station.

In the first feature of the present invention, the mobile communication method may further comprise the step of when a predetermined time period elapses after the registration of the access-unpermitted mobile station, canceling the registration of the access-unpermitted mobile station.

In the first feature of the present invention, the mobile communication method may further comprise the step of when a second predetermined communication is performed, canceling the registration of the access-unpermitted mobile station.

In the first feature of the present invention, the mobile communication method may further comprise the steps of upon registration of the access-unpermitted mobile station as the mobile station allowed to access the specific radio base station, notifying the access-unpermitted mobile station of the registration, and the access-unpermitted mobile station managing a temporarily-given access right for the specific radio base station on the basis of the notification.

In the first feature of the present invention, the mobile communication method may further comprise the steps of upon cancellation of the registration of the access-unpermitted mobile station, notifying the access-unpermitted mobile station of the cancellation, and the access-unpermitted mobile station deleting the temporarily-given access right for the specific radio base station on the basis of the notification.

The second feature of the present invention relates to a network apparatus used in a mobile communication method for allowing an access-permitted mobile station to access a specific radio base station, the network apparatus comprising a registration unit configured to, when an access-unpermitted mobile station not registered as a mobile station allowed to access the specific radio base station performs a first predetermined communication in a predetermined area, register the access-unpermitted mobile station as the mobile station allowed to access the specific radio base station.

In the second feature of the present invention, the registration unit may cancel the registration of the acaess-unpermitted mobile station when it is detected that the access-unpermitted mobile station has moved out of the predetermined area.

In the second feature of the present invention, the registration unit may cancel the registration of the access-unpermitted mobile station when a predetermined time period elapses after the registration of the access-unpermitted mobile station.

In the second feature of the present invention, the registration unit may cancel the registration of the access-unpermitted mobile station when a second predetermined communication is performed.

In the second feature of the present invention, upon registration of the access-unpermitted mobile station as the mobile station allowed to access the specif ic radio base station, the registration unit may notify the access-unpermitted mobile station of the registration.

In the second feature of the present invention, upon cancellation of the access-unpermitted mobile station as the mobile station allowed to access the specific radio base station, the registration unit may notify the access-urapermitted mobile station of the cancellation.

The third feature of the present invention relates to a radio base station configured to be accessible from only an access-permitted mobile station, the radio base station comprising a registration unit configured to, when an access-unpermitted mobile station not registered as a mobile station allowed to access the radio base station performs a first predetermined communication in a predetermined area, register the access-unpermitted mobile station as the mobile station allowed to access the radio base station.

In the third feature of the present invention, the registration unit may cancel the registration of the access-unpermitted mobile station when it is detected that the access-unpermitted mobile station has moved out of the predetermined area.

In the third feature of the present invention, the registration unit may cancel the registration of the access-unpermitted mobile station when a predetermined time period elapses after the registration of the access-unpermitted mobile station.

In the third feature of the present invention, the registration unit may cancel the registration of the access-unpermitted mobile station when a second predetermined communication is performed.

In the third feature of the present invention, upon registration of the access-unpermitted mobile station as the mobile station allowed to access the radio base station, the registration unit may notify the access-unpermitted mobile station of the registration.

In the third feature of the present invention, upon cancellation of the access-unpermitted mobile station as the mobile station allowed to access the radio base station, the registration unit may notify the access-unpermitted mobile station of the cancellation.

### EFFECTS OF THE INVENTION

As described above, the present invention provides the mobile communication method and the network apparatus which are capable of achieving flexible and quick update of the access list and reduction of the processing load related to optimum management of the access list, without using special processing such as editing the access list.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of an access-permitted mobile station management server according to the first embodiment of the present invention.
[Fig. 3] Fig. 3 is a table showing an example of an access list managed by an access list in the access-permitted mobile station management server according to the first embodiment of the present invention.
[Fig. 4] Fig. 4 is a sequence diagram showing an operation of the mobile communication according to the first embodiment of the present invention.
[Fig. 5] Fig. 5 is an overall configuration diagram of a mobile communication system according to Modification 1 of the present invention.
[Fig. 6] Fig. 6 is an overall configuration diagram of a mobile communication system according to Modification 2 of the present invention.
[Fig. 7] Fig. 7 is an overall configuration diagram of a mobile communication system according to Modification 3 of the present invention.

### MODES FOR CARRYING OUT THE INVENTION

### (Configuration of Mobile Communication System according to First Embodiment of Present Invention)

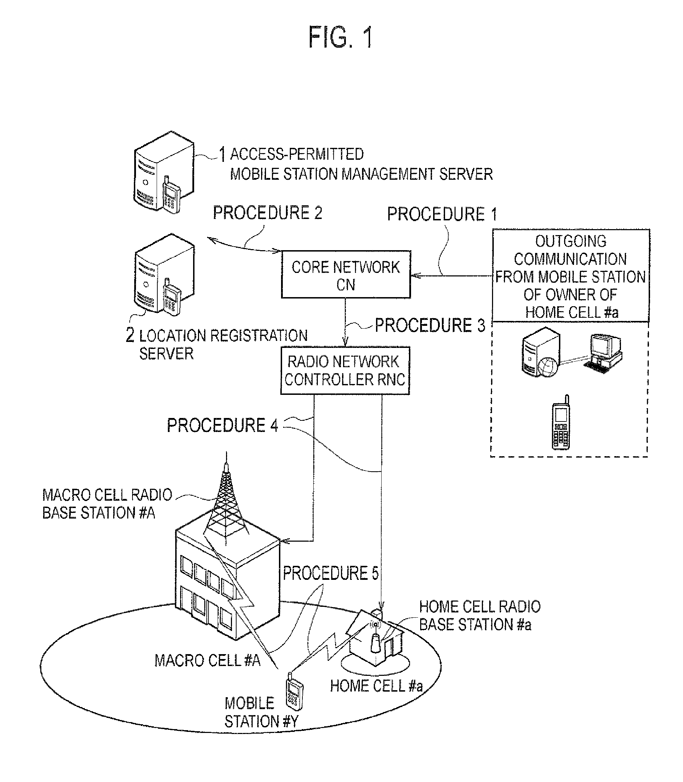

With reference to Figs. 1 to 3, a description is given of a configuration of a mobile communication system according to a first embodiment of the present invention.

As shown in Fig. 1, the mobile communication system includes a macro cell radio base station #A which manages a macro cell #A, a home cell radio base station (femto radio base station) #a which manages a home cell #a, a radio network controller RNC, and an access-permitted mobile station management server 1 and a location registration server 2 which are connected to a core network CN.

In the present embodiment, only a mobile station registered as a mobile station allowed to access the home cell radio base station #a (a specific radio base station) in an access list managed by the access-permitted mobile station management server 1 can access the home cell radio base station #a (perform location registration process, radio link establishment process, and the like).

In other words, a mobile station not registered as a mobile station allowed to access the home cell radio base station #a (a specific radio base station) in the access list managed by the access-permitted mobile station management server 1 cannot access the home cell radio base station #a (perform attach procedure, location registration process, radio link establishment process, and the like).

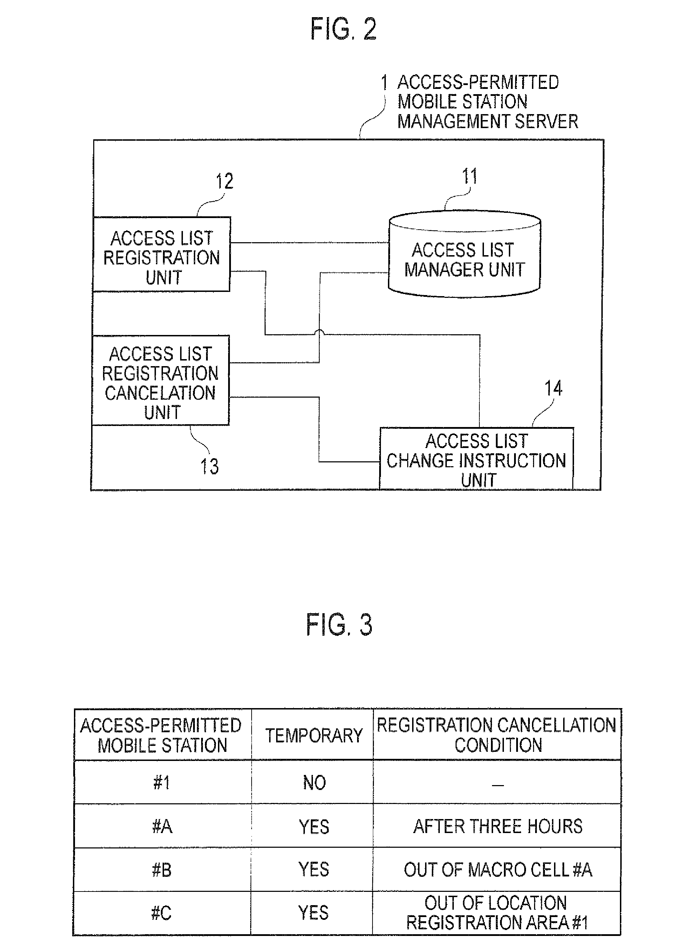

As shown in Fig. 2, the access-permitted mobile station management server 1 includes an access list manager unit 11, an access list registration unit 12, an access list registration cancelation unit 13, and an access list change instruction unit 14.

Note that, part or all of these functions of the access-permitted mobile station management server 1 may be included in any of network apparatuses such as the macro cell radio base station #A, the home cell radio base station #a, the radio network controller RNC, and an exchange MSC/SGSN in the core network CN.

Moreover, the functions of the access-permitted mobile station management server 1 may be included in one network apparatus or may be included separately in multiple network apparatuses.

The access list manager unit 11 is configured to manage the access list which is used to register the mobile station allowed to access the home cell radio base station #a.

Fig. 3 shows an example of the access list managed by the access list manager unit 11. The access list shown in Fig. 3 is configured of multiple records each including "access-permitted mobile station", "temporary", and "registration cancelation condition".

Here, "access-permitted mobile station" shows identification information of a mobile station which is registered as the mobile station allowed to access the home cell radio base station #a (a specific radio base station). "temporally" indicates whether the registration of the mobile station is temporal or constant. "Registration cancellation condition" shows a condition to cancel the registration of the mobile station.

The access list registration unit 12 is configured to register a mobile station which is to be given an access right to (permission to use) the home cell radio base station #a, in the access list managed by the access list manager unit 11.

Specifically, the access list registration unit 12 is configured as follows. When an access-unpermitted mobile station not registered in the access list managed by the access list manager unit 11, that is, an access-unpermitted mobile station not registered as the mobile station allowed to access the home cell radio base station #a performs a first predetermined communication in a predetermined area, the access list registration unit 12 registers the access-unpermitted mobile station as the mobile station allowed to access the home cell radio base station #a.

Here, the predetermined area is a cell (for example, the macro cell #A or the like) existing near the neighborhood of the home cell #a, and is set in advance. For example, the access list registration unit 12 determines whether the above-described access-unpermitted mobile station is currently in the predetermined area or not by inquiring of the location registration server 2 or the like.

Moreover, the first predetermined communication is a communication set in advance, and is assumed to be any of communications such as an incoming communication (call, e-mail, or the like) to the access-unpermitted mobile station from a communication device (mobile station or the like) registered as one for the owner of the home cell #a, an outgoing communication (call, e-mail, or the like) from the access-unpermitted mobile station to the communication device (mobile station or the like) registered as one for the owner of the home cell #a, an incoming communication (call, e-mail, or the like) to the access-unpermitted mobile station from the access-permitted mobile station registered in the access list for the home cell radio base station #a, an outgoing communication (call, e-mail, and the like) from the access-unpermitted mobile station to the access-permitted mobile station registered in the access list for the home cell radio base station #a, an access to an internet site registered as one for the owner of the home cell #a, and the like.

Note that, specific information may be attached to calling party information (telephone number or e-mail address of the calling party), called party information (telephone number or e-mail address of the called party), or the like so that the incoming and the outgoing communications can be identified as ones according to the first predetermined communication.

In addition, the outgoing communication according to the first predetermined communication may be performed when a certain operation (pressing of a button for the outgoing communication according to the first predetermined communication) is performed by the above-described access-unpermitted mobile station or the communication device (mobile station or the like) registered as one for the owner of the home cell #a.

Here, with reference to Fig. 1, a description is given of an example in which, as the first predetermined communication, an outgoing communication is performed from the owner of the home cell #a to a mobile station #Y nat resisted as the mobile station allowed to access the home cell radio base station #a.

Firstly, the owner of the home cell #a transmits an outgoing communication request for the mobile station #Y by using a registered communication device (Procedure 1).

Secondly, the core network CN inquires of the location registration server 2 as to the current area information of the mobile station #Y (Procedure 2).

Thirdly, the core network CN transmits a paging signal transmission request to the radio network controller RNC in which the mobile station #Y currently exists (Procedure 3).

Fourthly, the radio network controller RNC transmits the paging signal transmission request to the macro cell radio base station #A and the home cell radio base station #a (Procedure 4).

Fifthly, the mobile station #Y performs incoming communication process in accordance with a paging signal received (Procedure 5).

Here, in Procedure 2, the access list registration unit 12 determines whether to register the mobile station #Y as the mobile station allowed to access the home cell radio base station #a by referring to the current area information of the mobile station #Y and the access list for the home cell radio base station #a.

Alternatively, for example, if the owner of the home cell has installed the home cell radio base station #a in a store, a park, a train, or the like for commercial purpose, the access list registration unit 12 may be configured as follows. The access list registration unit 12 registers the above-described access-unpermittedmobile station as the mobile station allowed to access the home cell radio base station #a when the access-unpermitted mobile station performs the first predetermined communication in the predetermined area and satisfies a predetermined condition (for example, having paid the charge, being a member of a predetermined service, or the like).

The access list registration cancelation unit 13 is configured to remove the access-unpermitted mobile station temporarily registered by the access list registration unit 12 from the access list.

Specifically, the access list registration cancelation unit 13 may be configured to cancel the registration of the above-described access-unpermitted mobile station when detecting that the aocess-unpermitted mobile station has moved out of the predetermined area.

Moreover, the access list registration cancelation unit 13 may be configured to cancel the registration of the above-described access-unpermitted mobile station when a predetermined time period elapses from the registration of the access-unpermitted mobile station (when a predetermined timer expires).

Furthermore, the access list registration cancelation unit 13 may be configured to cancel the registration of the above-described access-unpermitted mobile station when a second predetermined communication is performed.

Here, the second predetermined communication is set in advance and is assumed to be any of the following communications: for example, an incoming communication (call, e-mail, or the like) to the access-unpermitted mobile station from the communication device (mobile station or the like) registered as one for the owner of the home cell #a, an outgoing communication (call, e-mail, or the like) from the access-unpermitted mobile station to the communication device (mobile station or the like) registered as one for the owner of the home cell #a, an incoming communication (call, e-mail, or the like) to the access-unpermitted mobile station from the access-permitted mobile station registered in the access list for the home cell radio base station #a, an outgoing communication (call, e-mail, or the like) from the access-unpermitted mobile station to the access-permitted mobile station registered in the access list for the home cell radio base station #a, an access to an internet site registered as one for the owner of the home cell #a, and the like.

Note that, specific information can be attached to the calling party information (telephone number or e-mail address of the calling party), the called party information (telephone number or e-mail address of the called party), or the like so that the incoming and the outgoing communications can be identified as ones according to the second predetermined communication.

In addition, as in the case of the first predetermined communication described above, the outgoing communication according to the second predetermined communication can be performed when a certain operation (pressing of a button for the outgoing communication according to the second predetermined communication) is performed by the above-described access-unpermitted mobile station or the communication device (mobile station or the like) registered as one for the owner of the home cell #a.

The access list change instruction unit 14 is configured to notify a predetermined network apparatus of a content of update in the access list as needed.

### (Operations of Mobile Communication System according to First Embodiment of Present Invention)

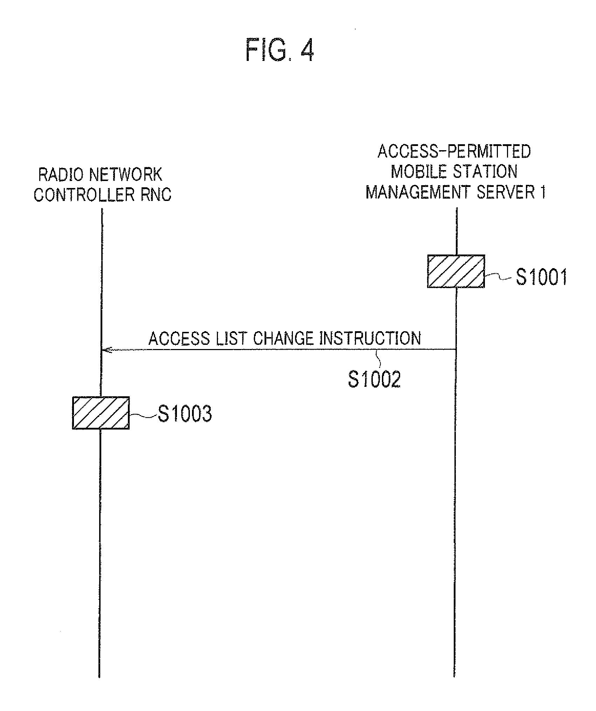

With reference to Fig. 4, a deception is given of operations of the mobile communication system according to the first embodiment of the present invention.

As shown in Fig. 4, in step S1001, the access-permitted mobile station management server 1 detects that the mobile station Y# (whose location is registered in the macro cell #A) not registered as the mobile station allowed to access the home cell radio base station #a has performed the first predetermined communication in the predetermined area.

In step S1002, the access-permitted mobile station management server 1 registers the mobile station #Y as the mobile station allowed to access the home cell radio base station #a in the access list for the home cell radio base station #a. Then, the access-permitted mobile station management server 1 notifies the radio network controller RNC of the registration result by using an access list change instruction.

In step S1003, the radio network controller RNC updates the access list managed by itself, and notifies the mobile station #Y of the update result.

The mobile station #Y performs the location registration process for the home cell #a in response to the notification.

### (Advantageous Effects of Mobile Communication System according to First Embodiment of Present Invention)

The mobile communication system of the first embodiment of the present invention can make simple and flexible an update operation of the access list in which the mobile station allowed to access the home cell radio base station #a is registered. Thus, management load imposed on a manager of the access list (for example, the owner of the home cell #a, a telecommunications carrier, or the like) can be reduced.

According to the mobile communication system of the first embodiment of the present invention, the registration of the access-unpermitted mobile station registered temporarily in the access list is canceled when the predetermined condition is satisfied. Thus, bloating of a database managing the access list can be suppressed, and reduction in a retrieval time can be achieved.

According to the mobile communication system of the first embodiment of the present invention, various effective services can be expected to be provided, such as a service (charge discount, service limited to a certain area, and the like) based on how often the access-unpermitted mobile station is temporarily registered in the access list (the frequency of use of the home cell) and the like.

### (Modification 1)

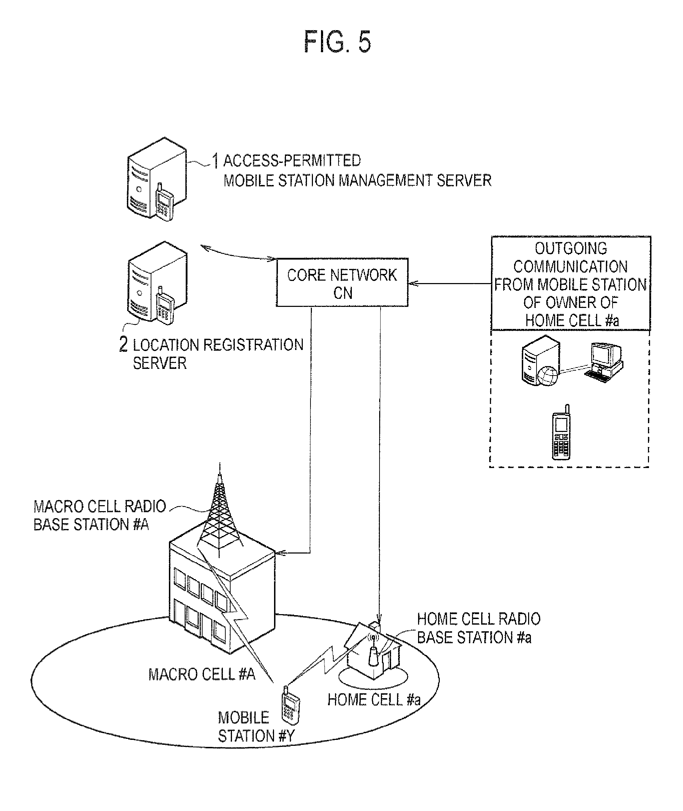

Although the above embodiment is described by taking a W-CDMA mobile communication system as an example, the present invention is not limited to this mobile communication system, and is also applicable to an LTE (Long Term Evolution) mobile communication system as shown in Fig. 5, for example.

The LTE mobile communication system is described as Modification 1 while focusing on differences from the mobile communication system of the first embodiment.

In the mobile communication system of Modification 1, part or all of the function of the access-permitted mobile station management server 1 shown in Fig. 2 may be included in any of network apparatuses such as the macro cell radio base station #A, the home cell radio base station #a, and an exchange MME in the core network CN.

Moreover, the functions of the access-permitted mobile station management server 1 may be included in one network apparatus or may be included separately in multiple network apparatuses.

In the LTE mobile communication system according to Modification 1, a mobile station USE can manage "Tracking Area information" as information for specifying an access right to a specific radio base station eNB.

Specifically, the above-described access list registration unit 12 is configured as follows. When the access-unpermitted mobile station not registered in the access list managed by the access list manager unit 11, that is, the access-unpermitted mobile station not registered as the mobile station allowed to access the home cell radio base station #a performs the first predetermined communication in the predetermined area, the access list registration unit 12 registers the access-unpermitted mobile station as the mobile station allowed to access the home cell radio base station #a, and notifies the access-unpermitted mobile station that the access right has been temporarily given thereto.

The access-unpermitted mobile station having received such notification may be configured to add the temporarily-given access right for the home cell radio base station #a to "Tracking Area Information".

Note that, when the temporarily-given access right for the home cell radio base station #a is included in "Tracking Area Information", the access-unpermitted mobile station can access the home cell radio base station #a.

Here, the access-unpermitted mobile station may be configured to add the access right to "Tracking Area Information" only when a predetermined condition is satisfied (for example, when a setting is set up, indicating that the user of the access-unpermitted mobile station desires the access right).

Alternatively, the access-unpermitted mobile station may acquire the access right when a predetermined condition is satisfied, instead of the above-described access list registration unit 12 spontaneously making the notification as described above.

The above-described access list registration cancelation unit 13 is configured to remove the access-txnpermitted mobile station temporarily registered by the access list registration unit 12 from the access list, and to notify the access-unpermitted mobile station of the removal.

The access-unpermitted mobile station having received such notification may be configured to delete the temporarily-given access right for the home cell radio base station #a from "Tracking Area Information".

As a result, the access-unpermitted mobile station can no longer access the home cell radio base station #a since the temporarily-given access right for the home cell radio base station #a is not included in "Tracking Area Information" anymore.

### (Modification 2)

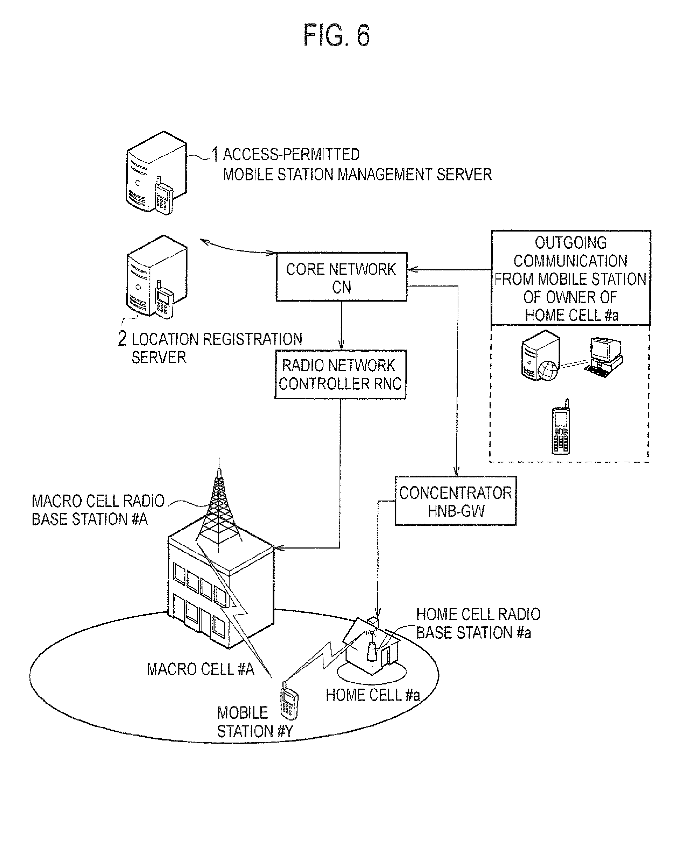

Fig. 6 shows a mobile communication system according to Modification 2. In the mobile communication system, the macro cell radio base station #A is accommodated in the radio network controller RNC, and the home cell radio base station #a is accommodated in a concentrator HNB-GW.

In the mobile communication system according to Modification 2, part or all of the functions of the access-permitted mobile station management server 1 shown in Fig. 2 may be included in any of network apparatuses such as the macro cell radio base station #A, the home cell radio base station #a, the radio network controller RNC, the concentrator HNB-GW, and the exchange MSC/SGSN in the core network CN.

Moreover, the functions of the access-permitted mobile station management server 1 may be included in one network apparatus or may be included separately in multiple network apparatuses.

### (Modification 3)

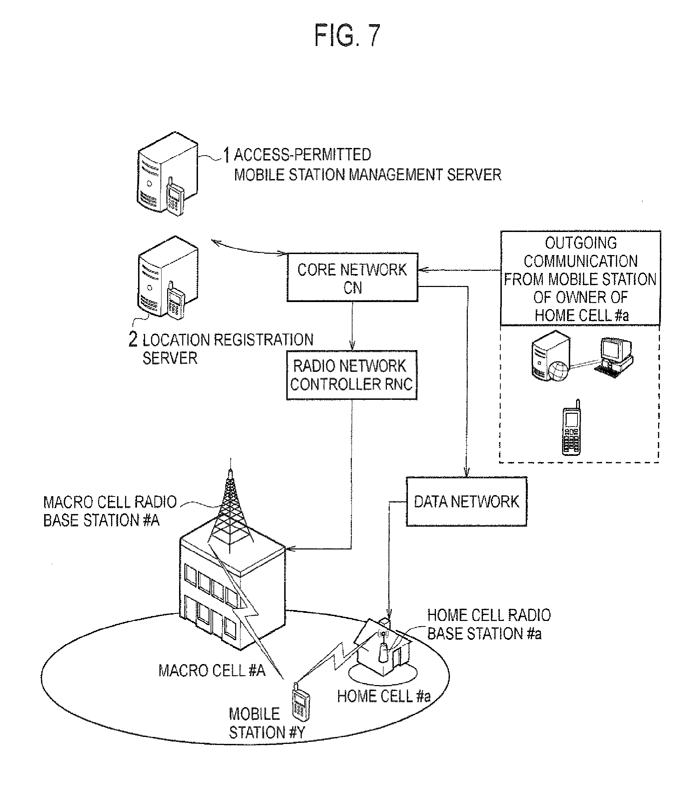

In a mobile communication system according to Modification 3 shown in Fig. 7, the macro cell radio base station #A is accommodated in the radio network controller RNC, and the home cell radio base station #a is accommodated in a gateway apparatus in a data network such as the Internet.

In the mobile communication system according to Modification 3, part or all of the functions of the access-permitted mobile station management server 1 shown in Fig. 2 may be included in any of network apparatuses such as the macro cell radio base station #A, the home cell radio base station #a, the radio network controller RNC, the gateway apparatus, and the exchange MSC/SGSN in the core network CN.

Note that operation of the mobile station, the home cell radio base station, the macro cell radio base station, the access-permitted management server, and the location registration server that have been described above may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the mobile station, the home cell radio base station, the macro cell radio base station, the access-permitted management server, and the location registration server. Also, the storage medium and the processor may be provided in the mobile station, the home cell radio base station, the macro cell radio base station, the access-permitted management server, and the location registration server as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

## Claims

1. A mobile communication method for allowing an access-permitted mobile station to access a specific radio base station, the mobile communication method comprising the step of
when an access-unpermitted mobile station not registered as a mobile station permitted to access the specific radio base station performs a first predetermined communication in a predetermined area, registering the access-unpermitted mobile station as the mobile station allowed to access the specific radio base station.

2. The mobile communication method according to claim 1 further comprising the step of
when it is detected that the access-unpermitted mobile station has moved out of the predetermined area, canceling the registration of the access-unpermitted mobile station.

3. The mobile communication method according to claim 1 further comprising the step of
when a predetermined time period elapses after the registration of the access-unpermitted mobile station, canceling the registration of the access-unpermitted mobile station.

4. The mobile communication method according to claim 1 further comprising the step of
when a second predetermined communication is performed, canceling the registration of the access-unpermitted mobile station.

5. The mobile communication method according to claim 1 further comprising the steps of:
upon registration of the access-Yanpermitted mobile station as the mobile station allowed to access the specific radio base station, notifying the access-unpermitted mobile station of the registration; and
the access-unpermitted mobile station managing a temporarily-given access right for the specific radio base station on the basis of the notification.

6. The mobile communication method according to claim 5 further comprising the steps of:
upon cancelation of the registration of the access-unpermitted mobile station, notifying the access-unpermitted mobile station of the cancelation; and
the access-unpermitted mobile station deleting the temporarily-given access right for the specific radio base station on the basis of the notification.

7. A network apparatus used in a mobile communication method for allowing an access-permitted mobile station to access a specific radio base station, the network apparatus comprising
a registration unit configured to, when an access-unpermitted mobile station not registered as a mobile station allowed to access the specific radio base station performs a first predetermined communication in a predetermined area, register the access-unpermitted mobile station as the mobile station allowed to access the specific radio base station.

8. The network apparatus according to claim 7, wherein the registration unit cancels the registration of the access-unpermitted mobile station when it is detected that the access-unpermitted mobile station has moved out of the predetermined area.

9. The network apparatus according to claim 7, wherein the registration unit cancels the registration of the access-unpermitted mobile station when a predetermined time period elapses after the registration of the access-unpermitted mobile station.

10. The network apparatus according to claim 7, wherein the registration unit cancels the registration of the access-unpermitted mobile station when a second predetermined communication is performed.

11. The network apparatus according to claim 7, wherein, upon registration of the access-unpermitted mobile station as the mobile station allowed to access the specific radio base station, the registration unit notifies the access-unpermitted mobile station of the registration.

12. The network apparatus according to claim 11, wherein, upon cancelation of the access-unpermitted mobile station as the mobile station allowed to access the specific radio base station, the registration unit notifies the access-unpermitted mobile station of the cancelation.

13. A radio base station configured to be accessible from only an access-permitted mobile station, the radio base station comprising
a registration unit configured to, when an access-unpermitted mobile station not registered as a mobile station allowed to access the radio base station performs a first predetermined communication in a predetermined area, register the access-unpermitted mobile station as the mobile station allowed to access the radio base station.

14. The radio base station according to claim 13, wherein the registration unit cancels the registration of the access-unpermitted mobile station when it is detected that the access-unpermitted mobile station has moved out of the predetermined area.

15. The radio base station according to claim 13, wherein the registration unit cancels the registration of the access-unpermitted mobile station when a predetermined time period elapses after the registration of the access-unpermitted mobile station.

16. The radio base station according to claim 13, wherein the registration unit cancels the registration of the access-unpermitted mobile station when a second predetermined communication is performed.

17. The radio base station according to claim 13, wherein, upon registration of the access-unpermitted mobile station as the mobile station allowed to access the radio base station, the registration unit notifies the access-unpermitted mobile station of the registration.

18. The radio base station according to claim 17, wherein, upon cancelation of the access-unpermitted mobile station as the mobile station allowed to access the radio base station, the registration unit notifies the access-unpermitted mobile station of the cancellation.
